# EUROPEAN PATENT SPECIFICATION

(11) **EP 2 156 607 B1**
(45) Date of publication and mention of the grant of the patent: **22.05.2013**
(21) Application number: 07747367.6
(22) Date of filing: 05.04.2007
(51) Int. Cl.: H04L 12/18

(54) **A METHOD, A COMPUTER PROGRAM AND A COMPUTER NETWORK FOR REAL-TIME DATA SHARING**
VERFAHREN, COMPUTERPROGRAMM UND COMPUTERNETZWERK FÜR DATA-SHARING IN ECHTZEIT
PROCÉDÉ, PROGRAMME INFORMATIQUE ET RÉSEAU D'ORDINATEURS POUR UN PARTAGE DE DONNÉES EN TEMPS RÉEL

(43) Date of publication of application: 24.02.2010
(73) Proprietor: Fratoria B.V., 3162 RA Rhoon (NL)
(72) Inventor: SMYCHLIAEV, Iaroslav Vladimirovitch, NL-3162 RA Rhoon (NL); VAN OOSTERHOUT, Maarten, NL-3319 AM Dordrecht (NL); ARIES, Anthonius Mattheus Marie, NL-2566 SC Den Haag (NL)
(74) Representative: Hatzmann, Martin
(86) International application number: PCT/NL2007/050143
(87) International publication number: WO 2008/123768

(56) References cited:
- US-A1- 2006 203 090
- US-B1- 6 909 708
- US-B1- 6 985 722

## Description

### FIELD OF INVENTION

The invention relates to a method of enabling real-time data sharing on a computer network comprising a plurality of computers, said method comprising the steps of:
- initiating a computer conferencing environment for the said plurality of computers, whereby at least one computer is enabled to operate in a sending mode and at least one computer is enabled to operate in a receiving mode;
- providing the data to the computers.

The invention further relates to a computer program.

The invention still further relates to a computer network for real-time data sharing comprising a plurality of computers, said computer network comprising:
- a computer conferencing environment operable on the said plurality of computers, whereby at least one computer is enabled to operate in a sending mode and at least one computer is enabled to operate in a receiving mode;
- data transmitting unit for providing the data to the computers.

### BACKGROUND OF THE INVENTION

An embodiment of a method as is set forth in the opening paragraph is known, for example, from contemporary practice in medical environment wherein a patient case, notably provided with a proposed treatment plan, like a radiotherapy planning, is to be discussed with a number of peer-reviewers. Such patient case usually comprises a great volume of data, for example diagnostic image data and/or supplementary data, like generated contours for target and/or critical regions or volumes, rendering data, notably representative of isodose distribution for a radiotherapy treatment plan, animation data representative of a geometry of a radiation beam of a radiotherapy treatment apparatus, like a linear accelerator. In the current practice such data are being communicated between the computers of the peer-reviewers using a standard protocol, notably Digital Communication in Medicine (DICOM) protocol, see also document US-B1-6909 708. The DICOM protocol comprises structured data lines comprising overall patient data. For applications in the field of radiotherapy, the DICOM protocol is updated to a DICOM RT protocol, comprising data on radiotherapy treatment planning together with original patient data.

It is a disadvantage of the known practice for peer-reviewing in that the speed of communication is kept low due to the fact that a great amount of data has to be communicated via the network each time an update or alteration of the case data under discussion occurs, for example a different irradiation geometry is being proposed.

### SUMMARY OF THE INVENTION

It is an object of the invention to provide a method for enabling real-time data sharing on a computer network wherein the local updates of the shared data are substantially instantly effectuated for all computers constituting the conferencing environment.

To this end the method according to the invention comprises the steps of:
- parameterizing local changes in the data on at least one computer;
- synchronizing the local changes in the data among the computers by transmitting the parameterization from at least one sending computer to the receiving computers.

The technical measure of the invention is based on the insight that suitable synchronizing of, notably desktop applications, may be successfully achieved by transmitting only the parametric data describing processes and changes in the dataset across the network. Due to this a fast, preferably instant synchronization is possible. The parametric data are constructed to represent a local change in the data, with respect to the overall data. This makes it possible to synchronize a great number of remote computers on a network, and to maximize speed of operation of a suitable conferencing environment. It is mentioned, that the overall quality of the operation depends on the number of computers and the throughput bandwidth between the nodes. Provided the number of computers does not exceed, for example two hundred, and the network is arranged to operate in a broad bandwidth, the method according to the invention enables substantially instant data updates.

In according to the further insight of the invention, the number of synchronized nodes can be quite high over modern internet connections, provided the amount of data being sent over the network is as low as possible. It is found that even for complex datasets, like geological data or medical data, comprising image data and overlay data, like radiotherapy treatment planning data, the methods of synchronization are applicable for fast data exchange between remotely arranged computers, because only changes in the data are being communicated.

In an embodiment of the method according to the invention the step of synchronization comprises:
- starting a sending mode on a computer whereat a data change subjected to data sharing has occurred;
- starting a receive mode on every other computer constituting the computer conferencing environment;
- sending the parameterization from the computer in the sending mode to the computers in the receiving mode;
- updating the data at the receiving computers in accordance with the parameterization.

The communication between the computers constituting the conferencing environment is established when an authorized user starts hosting a conferencing environment, and other users can then log into that application and take part in the conference session. Suitable examples of a communication mode comprise text, files, audio and/or video signals. Upon an event all users are logged into the conferencing environment, the synchronization session may start providing for real-time data sharing across the network.

Initially the data is being provided to the computers, said data could be downloaded from a suitable server, or, it can be provided by a computer constituting part of the conferencing environment. In a particular embodiment, it might be needed to load external data from a server on a network. The method according to the invention may comprise a supplementary step to assure that all computers in the conferencing environment have the same data. For example, first, the computer hosting the conferencing environment loads the data. It communicates to all other computers in the session which data to load. Other computers can then load the data from the server themselves, or the data can be uploaded by the server automatically once the computers have established suitable connections. Depending on the sensitivity of the data, a layer of security may be applied, by implementing a suitable authorization and, possibly, encryption of the transmitted data.

The method according to the invention is preferably implemented so that the synchronization will stay linear and no conflicts will occur due to the nature of the synchronization process. Preferably, the synchronization step operates as follows: the application at the computer on the sending end will be the one to which all the other computers on the receiving ends will be synchronized. So in a network of computers there will always be only one computer with the so called input focus. This means that every change of state of data on this computer will be sent to all the other computers. Every computer in the session can take the input focus which will eliminate the input focus at all the other computers.

In an embodiment of the method according to the invention the first data comprises static data. Static data may represent a data structure that will remain the same throughout the runtime of the conferencing environment, such as the layout of the application. Layout represents the visible windows, their positions, activated tools, etc. The method according to the invention accomplishes synchronization for static data in the following manner. There is an array which holds all the relevant data along with a flag which is turned on when the value is changed since the last synchronization. When sending the data, the index in the array is sent as well. The index has, therefore, a function of identifier of the value which has been changed. So the receiving computer knows which value it is receiving and can handle it accordingly.

In a further embodiment of the method according to the invention, the second data comprises dynamic data. Dynamic data represents data structures that are variable in size and might or might not exist. In making a radiotherapy treatment plan, for example, an important part constitutes delineation of target and critical areas or volumes and contours around such areas or volumes. This is an example of dynamic data. In principle, it is not pre-defined how many contours will exist and how many variables the contours themselves will hold.

In order to implement synchronization of local changes in the dynamic data, the method according to the invention comprises:
- running a subroutine for searching changes in the dynamic data on the sending computer;
- parameterizing the change in the dynamic data by generating an array of values on the sending computer, said values being related to local changes in the dynamic data;
- synchronizing the dynamic data on the receiving computers by transmitting the array from the sending computer.

Arrays may be constructed substantially in real time and can be arranged to collect information on new/changed/removed values and structures. These arrays are filled by iterating objects containing relevant data in search of changed values and structures, which are then transmitted as follows. First, the size of the array is sent to the receiving node, which then knows how many data to expect for this array. Then all the values of the array are sent. Ones the array is filled on the receiving end, it is pushed in to the right place. This array can hold instructions as well as variable values. For example, removing a certain structure in the application can be sent as an instruction. Preferably, data are transmitted through the computer network using a coded protocol. More preferably, a rate of synchronization cycles is adjustable. In an embodiment of the method according to the invention the steps of downloading data and uploading data are carried out in a-synchronic operations. This has an advantage of that the user interface is not interrupted at any time while the method is operating.

A computer program according to the invention comprises instructions for causing a processor to carry out the steps of the method as is set forth in the foregoing.

A computer network according to the invention comprises:
- computation means for parameterizing a local change in the data on the computer in sending mode;
- synchronization means for sharing the local changes in the data among the computers thereby updating the data for all computers logged into the computer conferencing environment.

Further advantageous embodiments of the computer system according to the invention are set forth with reference to claims 14 - 23.

### BRIEF DESCRIPTION OF THE DRAWINGS

The and other aspects of the invention will be discussed in more detail with reference to drawings.
Figure 1 presents a schematic view of an embodiment of the computer network according to the invention.
Figure 2 present a schematic view of an embodiment of the computer network according to the invention, whereby a computer is operating in a sending mode.
Figure 3 presents a schematic view of a conferencing environment arranged for reviewing a radiotherapy treatments planning.

### DETAILED DESCRIPTION

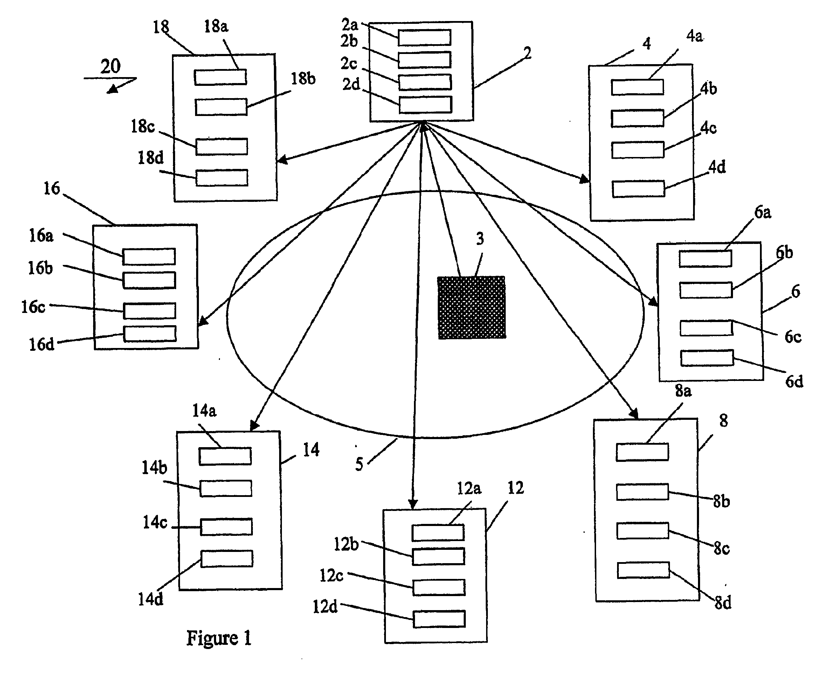

Figure 1 presents a schematic view of an embodiment of the computer network 20 according to the invention. The computer network 20 comprises a plurality of computers 2, 4, 6, 8, 12, 14, 16 and 18 interconnected by means of a suitable network 3. Each computer comprises a conferencing environment 2a, 4a, 6a, 8a, 12a, 14a, 16a, 18a, notably a suitably operable soft-ware program, for enabling data sharing between the said plurality of computers. The network further comprises a data transmitting unit 3, notably a suitable server, arranged for providing the data to the computers. It is noted that the step of providing data to the computers 2, 4, 6, 8, 12, 14, 16, 18 may be arranged at least in two alternative ways. First, it is possible that a computer initiating the conferencing environment, for example the computer 2, downloads suitable data from the server 3 and then distributes the data among the other computers constituting the network. Alternatively, it is possible that the computer initiating the conferencing environment, for example, computer 2 can send a suitable message to the other computers, so that they can download the sought data from the server themselves.

In the computer network according to the invention, each computer 2, 4, 6, 8, 12, 14, 16, 18 may further comprise a dedicated data transmitting unit 2b, 4b, 6b, 8b, 12b, 14b, 16b, 18b for enabling autonomous data uploading and data downloading.

Each computer further comprises computation means 2c, 4c, 6c, 8c, 12c, 14c, 16c, 18c arranged for parameterization any local change in the data. The parameterization results are generated locally and are transmitted when the corresponding computer enters a sending mode. In order to synchronize data across all computers engaged in the conferencing environment, each computer comprises a synchronization means 2d, 4d, 6d, 8d, 12d, 14d, 16d, 18d arranged for sharing the local changes in the data among the computers thereby updating the data for all computers logged into the computer conferencing environment.

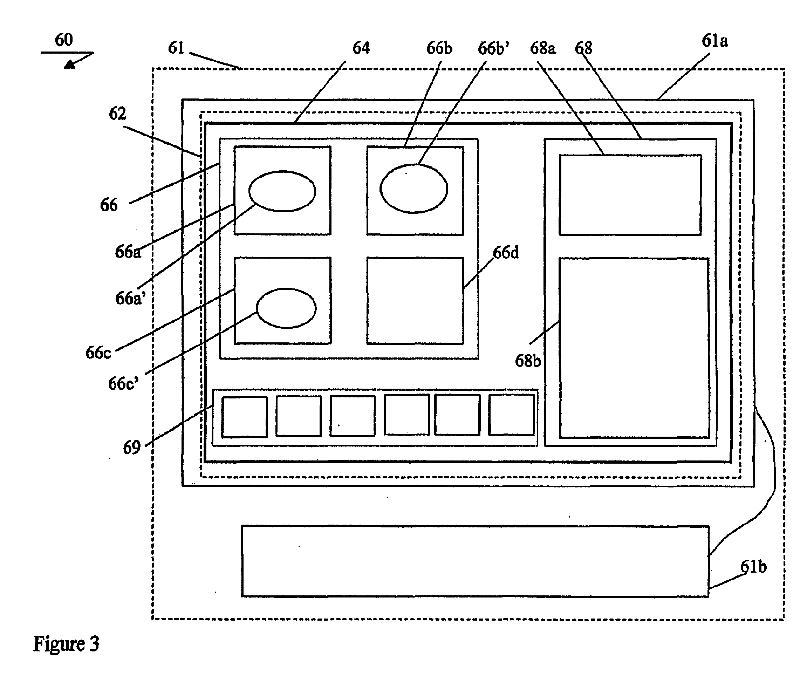

The operation of the computer network according to the invention will be further described based on an example related to reviewing of medical data, notably radiotherapy planning data. In a particular embodiment in an application for real time exchange of medical data, the methods and computer programs of the current invention are implemented as a central server communicating with the data sources and peers communicating directly with each other and with the server. The server requests medical imaging, preferably in DICOM format, from the data sources, such as CT, MRI, PET scanners or Treatment Planning Systems, and sends to peers where the users can view, add and alter information and exchange it with other peers in real time sessions. This data is preferably presented to the user in windows contained in a Multiple Document Interface environment. The user can then view the data in different ways and change provided planning data using suitable tools. These features are discussed in further detail with reference to Figure 3. The following steps are performed by the user in order to synchronize the application with other users.

First a user starts hosting a conferencing environment. Other users who will participate in the peer-review session log in to that conferencing environment. The following step will be to make sure every user in the synchronization process has the same DICOM data loaded. It is possible to load DICOM data from a central server on a network. In a typical implementation, only authorized individuals are allowed to load the data. Therefore the user will be taken through an authorization process in the form of a user id and password. For security reasons, the transmitted data is encrypted with the highest level of encryption algorithms available.

When starting the synchronization process, notably a presentation of a patient case, only users with the same data loaded can participate in the synchronization process and take the function of a sending computer as explained before. It is possible that there are users in the room who do not have the data loaded and do not take part in the synchronization process, but are there to provide other kinds of services during the session, such as providing their knowledge and expertise.

Sending data is done by the computer being in the sending mode of operation. The status array holds all static values along with a flag for every value. This flag is turned on if the value has been changed since the last synchronization. These values represent which viewers are opened, the position of the opened viewers, camera positions in the viewer, which tools are active and the specific parameters of the tools. This is a predefined amount of values. The size of the status array will remain the same throughout the runtime of the application. So this array represents the static data, as described earlier. A special function iterates through the status array and compares the value of the variable in the array with the current value of the variable in the application. If the values are different the value in the status array is made equal to the current value in the application and the flag is turned on.

For purposes of synchronizing the dynamic data, there are separate functions which iterate through objects containing relevant data in search of changed data. An array is returned which holds the data to be sent. The same is done for other values, for example opacity and colour mapping, which are used in the three-dimensional visualization. Those values represent dynamic data as well.

When sending data, the function for iteration through the status array is first called. Subsequently, the updated status array is iterated and all variables with a flag are sent. First, the index in the status array is sent - the index being the identifier - then the value itself is sent. When the iteration is done, an index of -1 is sent as an identifier which tells the receiving nodes that the iteration of all static data is done. All flags are removed. After that, all functions for filling arrays with dynamic data are called, and sent one by one in the following manner. First, the size of the array is sent, after that the array is iterated and all values are sent. It is possible that the array is empty and only a zero is sent.

Receiving data is done by all computers being in the receiving mode. When receiving the static data, every first value received is the index in the status array of the value coming next. So every changed value received is put in the right place in the status array. As soon as the receiving node obtains a value of -1 as an identifier, the iteration is broken and it continues further with the process of receiving the dynamic data. First, it receives the number of values in the specific array. It iterates with that number receiving one value at every iteration cycle and adding it to the array. When all data is received, a function is called that iterates through all arrays, places all variables in to the right place, and follows certain instructions that can be held by the data, such as a remove command for a specific contour. After a completion of a synchronization cycle, it can be repeated at a set interval rate, which in this case can be performed automatically. Alternatively, the synchronization can be initiated manually by any user logged in the conferencing environment.

The synchronization cycle can be repeated at a set interval rate. When the interval is set to fast, it is possible that the former synchronization is not done, when a new one is about to start. This will cause ambiguous synchronizations. To prevent any such conflicts, the following form of connection management is implemented.

When a computer is in sending mode (sending end), it is sending data to the other computers in the conference, which are in receiving mode (receiving end). This is done by first generating all data to be sent, thus generating the static data with flags and collecting changed dynamic data. Then a thread for every receiving end is started, the thread ID for this thread is stored in an array. When a receiving end is completely synchronized, it sends a signal back to the sending end. As soon as the sending end receives this signal, the thread which is responsible for sending data to that specific receiving end is ended and the thread ID for that thread is removed from the array.

When a synchronization is about to start, the array with thread IDs is checked for any pending threads. If there are pending thread this synchronization cycle is skipped to prevent ambiguous synchronizations.

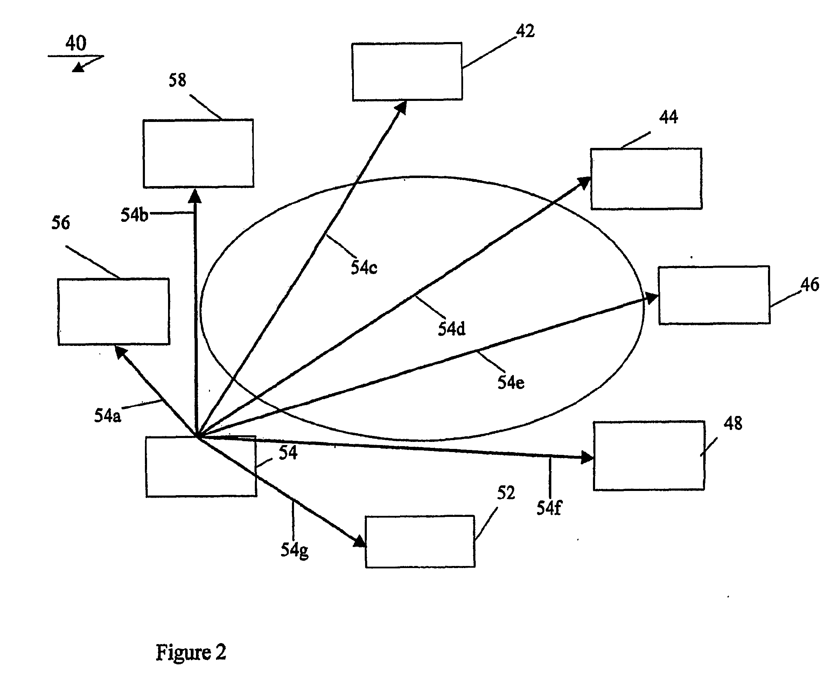

Figure 2 present a schematic view of an embodiment of the computer network 40 according to the invention, wherein a computer is operating in a sending mode. Let assume that the computer 54 is in the sending mode. The synchronization unit (not shown) of the computer 54 transmits local parameterization data pertaining to implemented changes in the static and/or in the dynamic data. In a first preferred embodiment, the parameterization 54a is directed substantially simultaneously to every computer in the receiving mode. Preferably, the computer network 40 according to the invention is arranged to enable the conferencing environment to allow only one computer to be in the ending mode. Upon an event such computer is detected, the conferencing subroutine preferably automatically sets the status of all other computer 42, 44, 46, 48, 52, 56, 58 to the receiving mode. In accordance with the technical measure of the invention the receiving computers are arranged to update their data in accordance with the received parameterization data. It is noted that although the described embodiment is a preferred one, it is also possible that the sending computer 54 first transmit parameterization data 54c to an initial host computer 42 which in turn distributes the parameterization data among the other receiving computers.

Figure 3 presents a schematic view of a conferencing environment 60 comprising a computer node arranged for reviewing a radiotherapy treatment planning. A local computer 61 logged onto a suitable conferencing environment (not shown). The computer 61 comprises a suitable input means 61b and a suitable display 61b. The computer 61 runs the conferencing environment 62, wherein results of a suitable treatment planning 64 can be visualized. Preferably, the treatment planning 64 comprises a plurality of individual windows 66, which can be treated as static data, referred to previously. More preferably, the windows 66a, 66b, 66c are arranged to provide clinically relevant reference, like typical projection planes, it being a transversal, a saggital and a coronal view. More preferably, each individual view 66a, 66b, 66c, is provided with a suitable contour 66a', 66b', 66c', notably overlaid on respective diagnostic images (not shown). Although for clarity reasons only a single contour is shown per window 66a, 66b, 66c, it will be appreciated that a suitable plurality of individual contours and volumes may be shown in each individual view. The individual windows 66 may further comprise an overview window 66d, providing, for example, a coronal stack of transversal images for delineating suitable radiotherapy fields. The treatment planning 64 further comprises a window 68 comprising suitable alpha-numerical information, like patient identification data 68a, case history data, for example information on adjuvant treatments, and planning input data 68a, comprising information on the type of radiotherapy treatment, like a type and energy of the radiation. Also data on geometry of the radiation fields may be given in the window 68b. Additionally, the treatment planning system 64 may comprise diagnostic images 69, like magnetic resonance images, CT data, PET images, or any suitable (fused) combination thereof.

In a conferencing environment 62 every user is permitted to alter the data, be it image data, like contouring, or beam data, like energy, type and geometry of the radiation field. Input means 61, for example a keyboard, or a mouse may be used for this purpose. It is also possible that the display 61a is arranged with a touch-sensitive screen, in this case the user may alter the contours by real-time drawing on the screen. This functionality is of particular importance, as the reviewer may have important insights about a suitable volume of the target or critical area, which must be considered while implementing a radiotherapy treatment plan. Additionally, the user may be permitted to place textual comments on any active window 66. Upon an event the user has input his ideas about possible modification of the proposed case, notably about contouring and treatment modus, the locally input data are being synchronized with the other parties participating in the conferencing environment in accordance with examples presented with reference to Figure 1.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

## Claims

1. A method of enabling real-time data sharing on a computer network comprising a plurality of computers, said method comprising the steps of:
- initiating a computer conferencing environment for the said plurality of computers, whereby at least one computer is enabled to operate in a sending mode and at least one computer is enabled to operate in a receiving mode;
- providing the data to the computers; **characterized by** the further steps of:
- parameterizing local changes in the data on at least one computer;
- synchronizing the local changes in the data among the computers by transmitting the parameterization from at least one sending computer to the at least one receiving computer.

2. A method according to claim 1, wherein the step of synchronization comprises:
- starting a sending mode on a computer whereat a data change subjected to data sharing has occurred;
- starting a receive mode on every other computer constituting the computer conferencing environment;
- sending the parameterization from the computer in the sending mode to the computers in the receiving mode;
- updating the data at the receiving computers in accordance with the parameterization.

3. A method according to claim 1 or 2, wherein data comprises static data, and the computer network comprising a sending computer and a plurality of receiving computers, wherein the step of synchronizing local changes in the static data of the sending computer comprises:
- parameterizing the change in the static data by generating an array of values for the sending computer, said values corresponding to the said static data;
- marking each change in the array with a flag at the index of the changed value in the array;
- synchronizing the static data on the computers by providing the changed array values together with the index from a sending computer to the receiving computers.

4. A method according to claim 1 or 2, wherein the data comprises dynamic data and wherein the step of synchronizing local changes in the dynamic data comprises:
- running a subroutine for searching changes in the dynamic data at the computer in sending mode;
- parameterizing the change in the dynamic data by generating an array of values for the computer in sending mode, said values being related to local changes in the dynamic data;
- synchronizing the dynamic data on the receiving computers by transmitting the array from the sending computer.

5. A method according to any one of the preceding claim, wherein a rate of synchronization cycles is adjustable.

6. A method according to any one of the preceding claims, wherein downloading data and uploading data are carried out in a-synchronic operations.

7. A computer program product comprising instructions for a processor for carrying out the steps of the method according to any one of the preceding claims.

8. A computer network (20, 40) for real-time data sharing comprising a plurality of computers (2, 4, 6, 8, 10, 12, 14, 16, 18), said computer network comprising:
- a computer conferencing environment (2a, 4a, 6a, 8a, 10a, 12a, 14a, 16a, 18a) operable on the said plurality of computers, whereby at least one computer is enabled to operate in a sending mode and at least one computer is enabled to operate in a receiving mode;
- a data transmitting unit (3) for providing the data to the computers; **characterized by** at least one computer comprising
- computation means for parameterizing a local change in the data on the computer in sending mode; and
- synchronization means for sharing the local changes in the data among the computers thereby updating the data for all computers in receiving mode logged into the computer conferencing environment.

9. A computer network (20, 40) according to claim 8, wherein the synchronization means at the at least one computer (54) comprises:
- a utility for entering a computer (54) into a sending mode;
- a utility for sending parameterization (54a) to the computers being in a receiving mode.

10. A computer network (20, 40) according to claim 8 or 9, wherein the data comprises a first data and a second data, the first data comprising static data, comprising a sending computer and a plurality of receiving computers, wherein the computation means of the sending computer are further arranged for:
- generating an array of values corresponding to the said static data;
- marking each change in the array with a flag at the index of the changed value in the array;
the synchronization means of the sending computer being further arranged for providing the changed array values together with the index to the receiving computers.

11. A computer network (20, 40) according to claim 8, wherein the data comprises dynamic data, the computer network comprising a sending computer and a plurality of receiving computers, wherein for the sending computer the computing means are further arranged for:
- running a subroutine for searching changes in the dynamic data;
- generating an array of values for the sending computer, said values being related to changes in the dynamic data;
the synchronization means at the sending computer being further arranged for transmitting the array across the network;
the synchronization means at the receiving computer being arranged for updating the data at the receiving computer in accordance with the parameterization.

12. A computer network (20, 40) according to any one of the preceding claims 8 - 11, wherein the synchronization means of the at least one computer is arranged for transmitting data through the computer network using a coded protocol.

13. A computer network (20, 40) according to any one of the preceding claims 8 - 12, wherein a rate of synchronization cycles is adjustable.

14. A computer network (20, 40) according to any one of the preceding claims 8-13, wherein downloading, uploading and updating data are carried out in a-synchronic operations.

15. A computer network (20, 40) according to any one of the preceding claims 8-14, wherein the data comprises medical data, preferably radiotherapy planning data.

## Patentansprüche

1. Verfahren zur Ermöglichung des Datenaustauschs in Echtzeit in einem Computernetzwerk, das mehrere Computer umfasst, wobei das Verfahren folgende Schritte umfasst:
- Initiieren einer Computerkonferenzumgebung für die mehreren Computer, wobei mindestens ein Computer freigegeben ist, um in einem Sendemodus betrieben zu werden, und mindestens ein Computer freigegeben ist, um in einem Empfangsmodus betrieben zu werden;
- Bereitstellen von Daten für die Computer; **gekennzeichnet durch** die folgenden weiteren Schritte:
- Parametrieren lokaler Änderungen in den Daten auf mindestens einem Computer;
- Synchronisieren der lokalen Änderungen in den Daten unter den Computern **durch** Übertragen der Parametrierung von mindestens einem sendenden Computer an mindestens einen empfangenden Computer.

2. Verfahren nach Anspruch 1, wobei der Synchronisierungsschritt umfasst:
- Starten eines Sendemodus auf einem Computer, auf dem eine Datenänderung, die einem Datenaustausch unterworfen ist, stattgefunden hat;
- Starten eines Empfangsmodus auf jedem Computer, der die Computerkonferenzumgebung darstellt;
- Senden der Parametrierung von dem Computer im Sendemodus an die Computer im Empfangsmodus;
- Aktualisieren der Daten an den empfangenden Computern in Übereinstimmung mit der Parametrierung.

3. Verfahren nach Anspruch 1 oder 2, wobei Daten statische Daten umfassen und das Computernetzwerk einen sendenden Computer und mehrere empfangende Computer umfasst, wobei der Schritt der Synchronisierung lokaler Änderungen in den statischen Daten des sendenden Computers Folgendes umfasst:
- Parametrieren der Änderung in den statischen Daten durch Generieren einer Wertematrix für den sendenden Computer, wobei die Werte den statischen Daten entsprechen;
- Markieren jeder Änderung in der Matrix durch ein Flag am Index des geänderten Werts in der Matrix;
- Synchronisieren der statischen Daten auf den Computern durch Bereitstellen der geänderten Matrixwerte zusammen mit dem Index von einem sendenden Computer an die empfangenden Computer.

4. Verfahren nach Anspruch 1 oder 2, wobei die Daten dynamische Daten umfassen und wobei der Schritt der Synchronisierung lokaler Änderungen in den dynamischen Daten Folgendes umfasst:
- Ausführen einer Unterroutine zur Suche nach Änderungen in den dynamischen Daten am Computer im Sendemodus;
- Parametrieren der Änderung in den dynamischen Daten durch Generieren einer Wertematrix für den Computer im Sendemodus, wobei sich die Werte auf lokale Änderungen in den dynamischen Daten beziehen;
- Synchronisieren der dynamischen Daten auf den empfangenden Computern durch Übertragen der Matrix vom sendenden Computer.

5. Verfahren nach einem der vorhergehenden Ansprüche, wobei eine Rate von Synchronisierungszyklen einstellbar ist.

6. Verfahren nach einem der vorhergehenden Ansprüche, wobei das Herunterladen von Daten und das Hinaufladen von Daten in asynchronen Operationen durchgeführt werden.

7. Computerprogrammprodukt, umfassend Anweisungen für einen Prozessor zur Ausführung der Schritte des Verfahrens nach einem der vorhergehenden Ansprüche.

8. Computernetzwerk (20, 40) zum Datenaustausch in Echtzeit, umfassend mehrere Computer (2, 4, 6, 8, 10, 12, 14, 16, 18), wobei das Computernetzwerk Folgendes umfasst:
- eine Computerkonferenzumgebung (2a, 4a, 6a, 8a, 10a, 12a, 14a, 16a, 18a), betreibbar auf den mehreren Computern, wobei mindestens ein Computer freigegeben ist, um in einem Sendemodus betrieben zu werden, und mindestens ein Computer freigegeben ist, um in einem Empfangsmodus betrieben zu werden;
- eine Datenübertragungseinheit (3) zum Bereitstellen von Daten an die Computer;
**gekennzeichnet durch** mindestens einen Computer, der Folgendes umfasst:
- Berechnungsmittel zum Parametrieren einer lokalen Änderung in den Daten auf den Computern, wodurch die Daten für alle Computer im Empfangsmodus, die in der Computerkonferenzumgebung angemeldet sind, aktualisiert werden.

9. Computernetzwerk (20, 40) nach Anspruch 8, wobei die Synchronisierungsmittel an dem mindestens einen Computer (54) Folgendes umfassen:
- ein Dienstprogramm, um einen Computer (54) in einen Sendemodus zu versetzen;
- ein Dienstprogramm, um eine Parametrierung (54a) an die Computer im Empfangsmodus zu senden.

10. Computernetzwerk (20, 40) nach Anspruch 8 oder 9, wobei die Daten erste Daten und zweite Daten umfassen, die ersten Daten statistische Daten umfassen, wobei das Computernetzwerk einen sendenden Computer und mehrere empfangende Computer umfasst, wobei die Berechnungsmittel des sendenden Computers ferner angeordnet sind, um:
- eine Wertematrix entsprechend den statischen Daten zu generieren;
- jede Änderung in der Matrix mit einem Flag am Index des geänderten Werts in der Matrix zu markieren;
wobei die Synchronisierungsmittel des sendenden Computers ferner angeordnet sind, um die geänderten Matrixwerte zusammen mit dem Index den empfangenden Computern bereitzustellen.

11. Computernetzwerk (20, 40) nach Anspruch 8, wobei die Daten dynamische Daten umfassen, das Computernetzwerk einen sendenden Computer und mehrere empfangende Computer umfasst, wobei für den sendenden Computer die Berechnungsmittel ferner angeordnet sind, um:
- eine Unterroutine zur Suche nach Änderungen in den dynamischen Daten auszuführen;
- eine Wertematrix für den sendenden Computer zu generieren, wobei die Werte sich auf Änderungen in den dynamischen Daten beziehen;
die Synchronisierungsmittel am sendenden Computer ferner angeordnet sind, um die Matrix über das Netzwerk zu übertragen;
die Synchronisierungsmittel am empfangenden Computer angeordnet sind, um die Daten an dem empfangenden Computer in Übereinstimmung mit der Parametrierung zu aktualisieren.

12. Computernetzwerk (20, 40) nach einem der vorhergehenden Ansprüche 8-11, wobei die Synchronisierungsmittel des mindestens einen Computers angeordnet sind, um Daten durch das Computernetzwerk mithilfe eines codierten Protokolls zu übertragen.

13. Computernetzwerk (20, 40) nach einem der vorhergehenden Ansprüche 8-12, wobei eine Rate von Synchronisierungszyklen einstellbar ist.

14. Computernetzwerk (20, 40) nach einem der vorhergehenden Ansprüche 8-13, wobei das Herunterladen, das Hinaufladen und das Aktualisieren von Daten in asynchronen Operationen durchgeführt wird.

15. Computernetzwerk (20, 40) nach einem der vorhergehenden Ansprüche 8-14, wobei die Daten medizinische Daten, vorzugsweise Radiotherapieplanungsdaten umfassen.

## Revendications

1. Procédé consistant à permettre le partage de données en temps réel sur un réseau informatique comprenant une pluralité d'ordinateurs, ledit procédé comprenant les étapes consistant à :
- initier un environnement de conférence par ordinateur pour ladite pluralité d'ordinateurs, moyennant quoi au moins un ordinateur est autorisé à fonctionner dans un mode d'envoi et au moins un ordinateur est autorisé à fonctionner dans un mode de réception ;
- fournir les données aux ordinateurs ;
**caractérisé par** les étapes supplémentaires consistant à :
- paramétrer des changements locaux dans les données sur au moins un ordinateur ;
- synchroniser les changements locaux dans les données entre les ordinateurs en transmettant le paramétrage d'au moins un ordinateur d'envoi au au moins un ordinateur de réception.

2. Procédé selon la revendication 1, dans lequel l'étape de synchronisation comprend :
- le démarrage d'un mode d'envoi sur un ordinateur au niveau duquel un changement de données soumis à l'échange de données s'est produit ;
- le démarrage d'un mode de réception sur chaque autre ordinateur constituant l'environnement de conférence par ordinateur ;
- l'envoi du paramétrage de l'ordinateur dans le mode d'envoi aux ordinateurs dans le mode de réception ;
- la mise à jour des données au niveau des ordinateurs de réception conformément au paramétrage.

3. Procédé selon la revendication 1 ou 2, dans lequel les données comprennent des données statiques, et le réseau informatique comprenant un ordinateur d'envoi et une pluralité d'ordinateurs de réception, dans lequel l'étape de synchronisation de changements locaux dans les données statiques de l'ordinateur d'envoi comprend :
- le paramétrage du changement dans les données statiques en générant un tableau de valeurs pour l'ordinateur d'envoi, lesdites valeurs correspondant auxdites données statiques ;
- le marquage de chaque changement dans le tableau avec un drapeau au niveau de l'indice de la valeur changée dans le tableau ;
- la synchronisation des données statiques sur les ordinateurs en fournissant les valeurs de tableau changées conjointement avec l'indice d'un ordinateur d'envoi aux ordinateurs de réception.

4. Procédé selon la revendication 1 ou 2, dans lequel les données comprennent des données dynamiques et dans lequel l'étape de synchronisation de changements locaux dans les données dynamiques comprend :
- l'exécution d'une sous-routine pour la recherche de changements dans les données dynamiques au niveau de l'ordinateur en mode d'envoi ;
- le paramétrage du changement dans les données dynamiques en générant un tableau de valeurs pour l'ordinateur en mode d'envoi, lesdites valeurs étant liées à des changements locaux dans les données dynamiques ;
- la synchronisation des données dynamiques sur les ordinateurs de réception en transmettant le tableau depuis l'ordinateur d'envoi.

5. Procédé selon l'une quelconque des revendications précédentes, dans lequel un taux de cycles de synchronisation est ajustable.

6. Procédé selon l'une quelconque des revendications précédentes, dans lequel le téléchargement de données et le téléversement de données sont effectués dans des opérations asynchrones.

7. Produit de programme d'ordinateur comprenant des instructions pour un processeur pour effectuer les étapes du procédé selon l'une quelconque des revendications précédentes.

8. Réseau informatique (20, 40) pour le partage de données en temps réel comprenant une pluralité d'ordinateurs (2, 4, 6, 8, 10, 12, 14, 16, 18), ledit réseau informatique comprenant :
- un environnement de conférence par ordinateur (2a, 4a, 6a, 8a, 10a, 12a, 14a, 16a, 18a) exploitable sur ladite pluralité d'ordinateurs, moyennant quoi au moins un ordinateur est autorisé à fonctionner dans un mode d'envoi et au moins un ordinateur est autorisé à fonctionner dans un mode de réception ;
- une unité de transmission de données (3) pour fournir les données aux ordinateurs ;
**caractérisé par** au moins un ordinateur comprenant
- des moyens de calcul pour paramétrer un changement local dans les données sur l'ordinateur en mode d'envoi ; et
- des moyens de synchronisation pour partager les changements locaux dans les données entre les ordinateurs, mettant ainsi à jour les données pour tous les ordinateurs en mode de réception connectés à l'environnement de conférence par ordinateur.

9. Réseau informatique (20, 40) selon la revendication 8, dans lequel les moyens de synchronisation au niveau du au moins un ordinateur (54) comprennent :
- un utilitaire pour faire entrer un ordinateur (54) dans un mode d'envoi ;
- un utilitaire pour envoyer un paramétrage (54a) aux ordinateurs qui sont dans un mode de réception.

10. Réseau informatique (20, 40) selon la revendication 8 ou 9, dans lequel les données comprennent des premières données et des secondes données, les premières données comprenant des données statiques, comprenant un ordinateur d'envoi et une pluralité d'ordinateurs de réception, dans lequel les moyens de calcul de l'ordinateur d'envoi sont en outre agencés pour :
- générer un tableau de valeurs correspondant auxdites données statiques ;
- marquer chaque changement dans le tableau avec un drapeau au niveau de l'indice de la valeur changée dans le tableau ;
les moyens de synchronisation de l'ordinateur d'envoi étant en outre agencés pour fournir les valeurs de tableau changées conjointement avec l'indice aux ordinateurs de réception.

11. Réseau informatique (20, 40) selon la revendication 8, dans lequel les données comprennent des données dynamiques, le réseau informatique comprenant un ordinateur d'envoi et une pluralité d'ordinateurs de réception, dans lequel pour l'ordinateur d'envoi, les moyens de calcul sont en outre agencés pour :
- exécuter une sous-routine pour la recherche de changements dans les données dynamiques ;
- générer un tableau de valeurs pour l'ordinateur d'envoi, lesdites valeurs étant liées à des changements dans les données dynamiques ;
les moyens de synchronisation au niveau de l'ordinateur d'envoi étant en outre agencés pour transmettre le tableau à travers le réseau ;
les moyens de synchronisation au niveau de l'ordinateur de réception étant agencés pour mettre à jour les données au niveau de l'ordinateur de réception conformément au paramétrage.

12. Réseau informatique (20, 40) selon l'une quelconque des revendications 8 à 11 précédentes, dans lequel les moyens de synchronisation du au moins un ordinateur sont agencés pour transmettre des données par l'intermédiaire du réseau informatique en utilisant un protocole codé.

13. Réseau informatique (20, 40) selon l'une quelconque des revendications 8 à 12 précédentes, dans lequel un taux de cycles de synchronisation est ajustable.

14. Réseau informatique (20, 40) selon l'une quelconque des revendications 8 à 13 précédentes, dans lequel le téléchargement, le téléversement et la mise à jour de données sont effectués dans des opérations asynchrones.

15. Réseau informatique (20, 40) selon l'une quelconque des revendications 8 à 14 précédentes, dans lequel les données comprennent des données médicales, de préférence des données de planification de radiothérapie.
